# EUROPEAN PATENT APPLICATION

(11) **EP 0 585 034 A2**
(43) Date of publication of application: **02.03.1994**
(21) Application number: 93306472.7
(22) Date of filing: 17.08.1993
(51) Int. Cl.: H04N 7/087

(54) **Teletext decoders**

(30) Priority: 19.08.1992 GB 9217562
(71) Applicant: PLESSEY SEMICONDUCTORS LIMITED, Swindon, Wiltshire SN2 2QW (GB)
(72) Inventor: Gill, Brian, Swindon, Wiltshire SN6 7JZ (GB)
(74) Representative: Hoste, Colin Francis

(57) **Abstract**

In a teletext decoder for a television receiver in which clearance of a page memory is initiated by reception of a page header of the page selected for display, the clearance is arranged to be aborted if it has not been completed when information in respect of the row next to the page header is received.

## Description

The present invention relates to teletext decoders for television receivers.

Teletext signals, representing a number of pages of data for display on the screen of a television receiver, are transmitted during the vertical or field blanking intervals of broadcast television signals, in the form of digitally coded data packets each occupying a time interval corresponding to one line scan period of the television signals. Up to twenty packets may be transmitted in each field blanking interval, and thirty two packets may be required to convey the data to be displayed on any one page of, say, twenty four rows each of forty graphic elements or alphanumeric characters. The pages are numbered, and may be associated in groups or magazines.

The transmission of a given page begins with and includes a page header packet, and the data to be displayed under that page header follows as a sequence of packets identified by the page and magazine numbers. The data may be transmitted either in parallel mode or in serial mode. In parallel mode data packets from different magazines are interleaved, the decoder in the television receiver accepting only those for the selected magazine. This is an efficient mode of transmission since all available vertical blanking interval lines can be filled with useful data.

In both parallel and serial mode, the requirement for an interval, of up to twenty milliseconds, between reception of a page header packet and of the subsequent row data packets to allow time for the decoder's page memory to be cleared, may be met by transmitting the page header packet as the last permitted line of a field blanking interval with the related row data packets following in the next field blanking interval. This may leave unused lines between the end of row data packets for the previous page and the new page header packet, which may be filled with copies of the new header.

It has been proposed, for example in German Patent Specification No. DE 3418068, to introduce an extra pre-header or advanced header in the field blanking interval before that in which transmission of a page is to be commenced, to provide advance warning to the decoder to clear the page memory. The normal header may then be followed immediately by the page data.

One problem of the advanced header system which affects all current teletext decoders is that if a specific page is requested between reception of the respective advanced header and the normal header the necessary page memory clearing interval may not be observed. Receipt of the normal page header packet will then initiate page memory clearance, but since the related row data packets may follow the normal header packet immediately those row packets received in the same field blanking interval as the normal header will be cleared from the page memory also. This results in partially received pages in memory which are subsequently displayed with the top of the page blank.

According to one aspect of the present invention, in a teletext decoder for a television receiver in which clearance of a page memory is arranged to be initiated in response to receipt of page header information in respect of a page selected for display, there are provided means to prevent clearance of said page memory if such clearance has not been completed when information in respect of the row to be displayed next to the page header of the selected page is received.

According to another aspect of the present invention, in a teletext decoder for a television receiver in which clearance of a page memory is arranged to be initiated in response to receipt of page header information in respect of a page selected for display, there are provided means to prevent the display of data in respect of said selected page if the clearance of said page memory has not been completed when information is received in respect of the row to be displayed next to the page header of the selected page.

A teletext decoder in accordance with the present invention will now be described with reference to the accompanying drawings, of which:-
Figure 1 shows a block schematic diagram of a television receiver incorporating a teletext decoder;
Figure 2 shows schematically sequences of teletext signals, and
Figure 3 shows a function diagram for the teletext decoder.

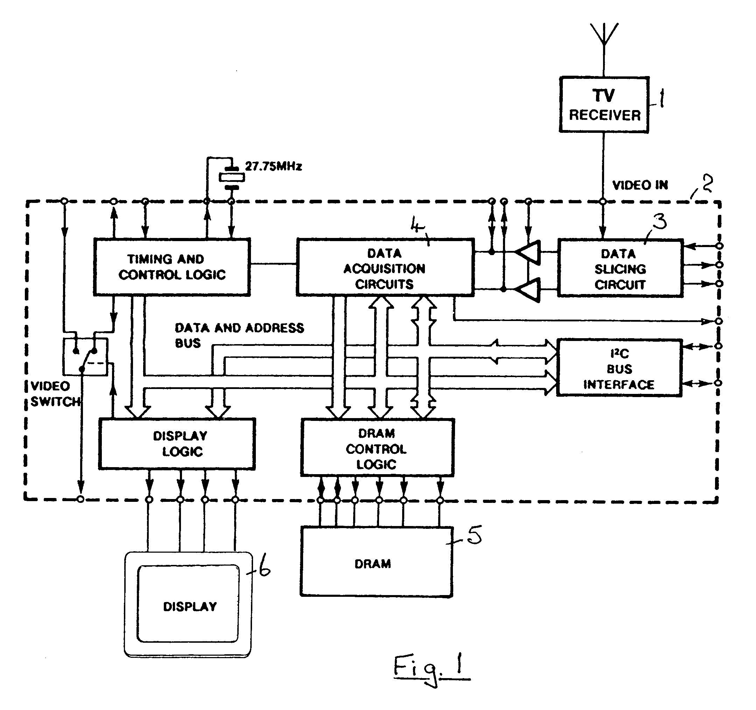

Referring first to Figure 1, in a television receiver adapted to receive and display teletext data, composite video signals from receiver circuit 1 are applied to a teletext decoder arrangement 2, where digitally encoded teletext signals received during field blanking intervals are prepared in data slicing circuit 3 for selection as required in data acquisition circuits 4, data packets relating to a page or pages selected by a user of the television receiver being entered in a page memory 5. Teletext data entered in the page memory 5 may subsequently be displayed on the screen 6 of the television receiver.

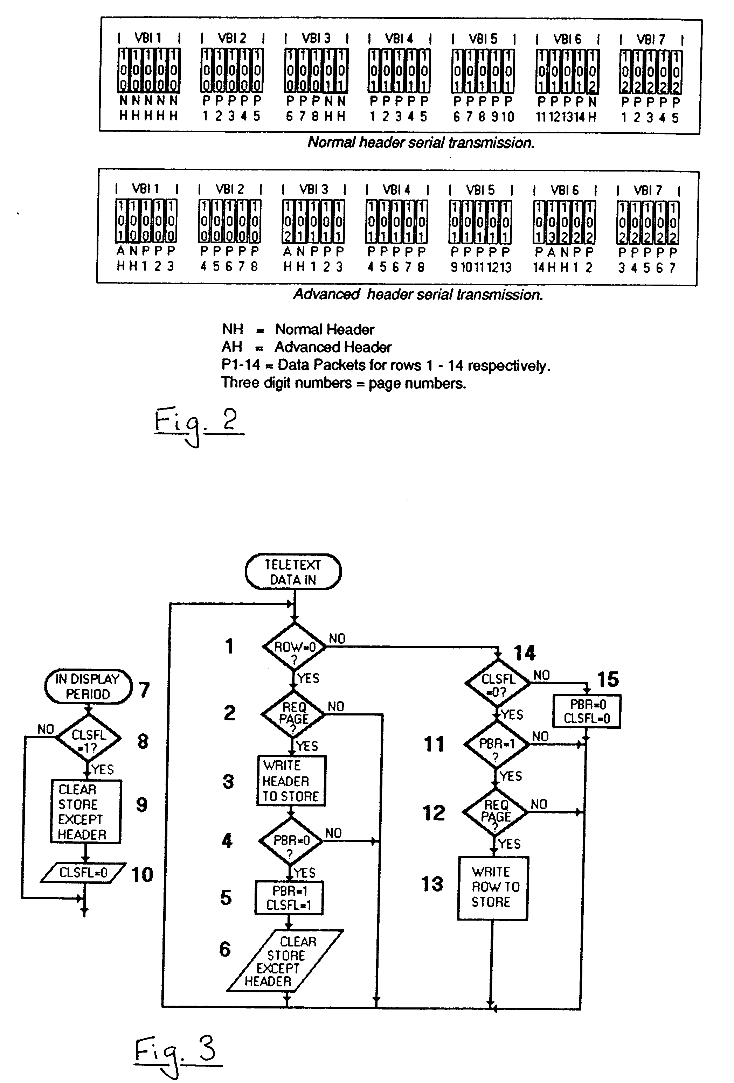

Referring to Figure 2, where for simplicity only five data packets are shown in each field blanking interval and only up to fourteen such packets are used to define a page of data to be displayed, the inefficient use of the intervals available with just normal headers in the field blanking interval preceding transmission of row packets, compared with the use of advanced headers, shows most clearly in the case where the transmission of row packets relating to a given page ends at the end of a field blanking interval, so that the whole of the next field blanking interval (VB1) has to be filled with copies of the normal header for the next page.

Referring now to Figure 3, the function diagram illustrates the acquisition of teletext data from received composite video signals, as follows:-
An incoming teletext data packet, which may comprise 360 bits, arranged as 45 bytes of 8 bits each, occupying an interval of the order of 50µ seconds, is checked to see if it relates to a row 0, that is, a header (block 1). If it does, a further check is made to see if it is the header of the page currently requested by the user (block 2), and if it is the data packet is written into the assigned page memory (block 3). Next the page-being-received flag PBR is checked, (block 4) and if it is found to be 'zero', indicating that the relevant page was not being received the PBR flag is set is set to 'one' and flag CLSFL is set (block 5) with the effect that the assigned page memory, except for the header, is cleared to spaces (block 6) ready for the data packets relating to the selected page.

As shown in blocks 7 to 10, if the flag CLSFL is set, then the assigned page memory clearance takes place during the next normal television field display period, and the CLSFL flag is then reset.

If a second header for the page currently requested, that is, a normal header, is now received, the decision in block 4 will be N0, since PBR has been set to 'one', and page clearance will not be initiated.

For a received data packet relating to other than a header row, if the CLSFL flag is not set (block 14), and if the data packet being received relates to the page selected by the user (blocks 11 and 12), that data packet is written in to the appropriate part of the assigned page memory.

If, however, a page selection is made by a user between reception of the relevant advanced header and the reception of the normal header, so that it is the normal header which sets the CLSFL flag to initiate clearance of the assigned page memory rather than the advanced header, then a row packet other than a header may be received before the CLSFL flag has been reset (block 10). If this eventuality is detected (block (14) then the page-being-received flag PBR and the CLSFL flag are reset (block 15) so that the page acquisition and the clearance of the assigned page memory are aborted.

## Claims

1. A teletext decoder for a television receiver in which clearance of a page memory is arranged to be initiated in response to receipt of page header information in respect of a page selected for display wherein there are provided means to prevent clearance of said page memory if such clearance has not been completed when information in respect of the row to be displayed next to the page header of the selected page is received.

2. A teletext decoder for a television receiver in which clearance of a page memory is arranged to be initiated in response to receipt of page header information in respect of a page selected for display, there are provided means to prevent the display of data in respect of said selected page if the clearance of said page memory has not been completed when information is received in respect of the row to be displayed next to the page header of the selected page.

3. A teletext decoder substantially as hereinbefore described with reference to Figure 3 of the accompanying drawings.
